# EUROPEAN PATENT SPECIFICATION

(11) **EP 1 183 815 B1**
(45) Date of publication and mention of the grant of the patent: **16.08.2006**
(21) Application number: 00939240.8
(22) Date of filing: 02.06.2000
(51) Int. Cl.: H04L 5/06, H04L 27/26

(54) **METHOD AND DEVICE IN A MULTI-TONE TRANSMISSION SYSTEM**
VERFAHREN, SOWIE EINRICHTUNG IN EINEM MEHRTONÜBERTRAGUNGSSYSTEM
DISPOSITIF ET PROCEDE POUR SYSTEME DE TRANSMISSION A FREQUENCES MULTIPLES

(30) Priority: 04.06.1999 SE 9902077
(43) Date of publication of application: 06.03.2002
(73) Proprietor: TELEFONAKTIEBOLAGET LM ERICSSON (publ), 164 83 Stockholm (SE)
(72) Inventor: BOSTRÖM, Jan, S-125 42 Älvsjö (SE); SVEVAR, Magnus, S-126 53 Hägersten (SE)
(74) Representative: Bergentall, Annika Maria
(86) International application number: PCT/SE2000/001145
(87) International publication number: WO 2000/076115

(56) References cited:
- EP-A2- 0 889 615
- GB-A- 2 326 070
- US-A- 4 639 911
- US-A- 5 323 391

## Description

### FIELD OF THE INVENTION

The invention relates to a method and a device in a multi-tone transmission system. Discrete MultiTone (DMT) modulation is a method by which the usable frequency range of a channel is separated into a plurality of frequency bands, for instance 256 bands. By dividing the frequency spectrum into multiple channels DMT is thought to perform better in the presence of interference sources such as AM radio transmitters. It is also better able to focus its trahsmit power on those portions of the spectrum in which it is profitable to send data. DMT forms the basis for Asymmetric Digital Subscriber Line (ADSL) and very high speed Digital Subscriber Line (VDSL). Therefore, the bandwidth used in a channel is adaptive. Depending on the transmission characteristics a DMT system can use parts of the allowed spectrum.

### STATE OF THE ART

For the above described systems presently available receivers use a single wideband analogue-digital converter with high resolution. This results in a high power consumption that is independent of the used bandwidth. In many applications a high power consumption constitutes a major problem. The digital signal is processed in a Digital Signal Processing unit (DSP) which is dimensioned to handle the full bandwidth. A drawback in such a configuration is that unnecessary operations are performed if only a part of the frequency spectrum is used.

In EP 0 889 615 A2, hardware costs and complexity are reduced at a receiver by dividing the analogue signal into several subbands and digitalising it separately in each subband.

### SUMMARY OF THE INVENTION

An object of the present invention is to overcome the problems and drawbacks of prior art systems. According to the invention there is provided a plurality of analogue-digital converters for converting separately the analogue signal in each subband into a digital signal. Each analogue-digital converter is associated to one subband, and each analogue-digital converter is activated and deactivated in dependence of the presence of a signal in the associated subband. In accordance with the invention the overall power consumption is decreased and the available bandwidth can be used more efficiently. Power is saved in both the Analogue and the Digital domain.

Further features and advantages of the invention appear in the description below and in the accompanying drawing and dependent claims.

### BRIEF DESCRIPTION OF THE DRAWINGS

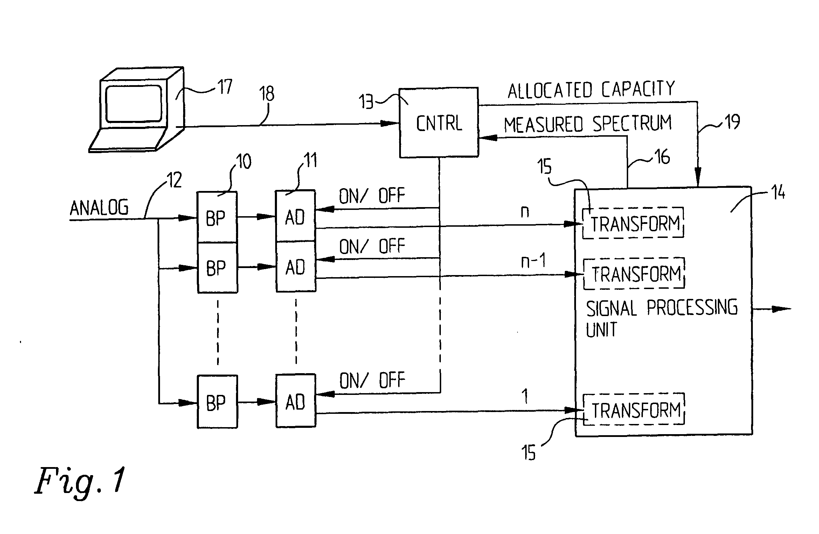

The invention will in the following be further described in a nonlimiting way and with reference to the accompanying drawing, Fig. 1, which is a schematic functional block diagram showing one embodiment of a device in accordance with the invention.

### DETAILED DESCRIPTION OF THE INVENTION

As shown in the figure a system in accordance with the invention comprises a plurality of band pass filters 10 together forming a filter bank. The transmission spectrum is subdivided into N spectral parts. The band pass filters 10 are connected to a line 12 through which an analogue signal is received. Each of the band pass filters 10 is connected to an analogue-digital converter 11 for converting the analogue DMT signal into a digital signal. The spectrum of each part n can be sampled at a base band rate due to the band pass character of the spectrum received by each A/D converter.

The bands are intimately connected to the FFT (fast Fourier transform) algorithm which DMT uses as its modulator and demodulator. The FFT is used to separate the frequencies into individual bands and it generates spectra, which are fully separable on the receiving end. Instead of FFT the discrete wavelet transform may be used. Normally, the discrete wavelet transform will do a better job of isolating the individual frequency spectra.

The assignment of channels is left flexible, but e.g. ADSL uses channels 6-31 for upstream (24KHz-136KHz), 32-250 for downstream (136KHz-1.1MHz). The modulation used on any given frequency channel is QAM. Channels 16 and 64 are reserved for pilot tones which are used to recover timing. The number of bits per symbol within each channel may be independently selected allowing the modem to be rate adaptive. Other systems, e.g. VDSL will use other settings.

A control unit 13 individually controls each analogue-digital converter 11. The control unit may switch the converters 11 on and off and also perform other control tasks such as assigning other lines or channels to the converters.

The digital signals from each of the analogue-digital converters 11 are supplied to entities 15 of a signal processing unit 14. These entities can be physical blocks or logical functions in a DSP and are dedicated for a separate part of the available bandwidth. While the input to each A/D converter is band pass filtered only the information for the tones in the passband will be present in the A/D converted signal. The signal processing unit 14 performs the appropriate digital filtering, transformation and detection of the tones in each part of the band.

As the filterbank divides the analogue signal into N bands each subband will be independent of the other bands after the filter bank. If the bandwidth for subband n>x, n<=N is not used for transmission the A/D converters and corresponding signal processing entities 15 for n>x will be switched off by the control unit 13.

In a multi receiver implementation a processor pool can be envisioned as a practical embodiment and each receiver path would be allocated the required processing capabilities from the pool. This could be both physical processing blocks such as FFT kernels or capacity in a generic DSP. In this way it is possible to avoid the allocation of resources that are not needed, and parts of the processor pool can be powered down or be used to accommodate more channels or more demanding coding schemes.

The control unit 13 will control the A/D converters and/or the entities 15 of the signal processing unit 14 in dependence of how the spectrum is used. The use of the spectrum can be determined by the signal processing unit 14 which continuously can monitor the complete spectrum. Information indicative of the use of the spectrum is transferred to the control unit through a first control line 16. It is possible also to determine the use of the spectrum manually and to transfer control information from a manually operated means 17, such as a computer, through a second control line 18. A third control line 19 is used by the control unit 13 to inform the signal processing unit 14 about the allocated capacity.

In a practical embodiment an analogue front-end may comprise ten A/D converters and ten band pass filters in a central office side. This side is capable of handling one VDSL channel. The signal processing unit 14 can be a common pool of DSPs that serves a lot of channels.

By connecting an ADSL modem at the consumer side only about one tenth of the available bandwidth is used. As a result most of the A/D converters can be turned off by the control unit 13 and the excess signal processing power can be used for more lines and to handle the more demanding coding used in ADSL. If more channels are to be used more analogue front ends are required.

The described system is very well suited for multitone based copper access modems especially using DMT. It is however applicable in all multitone based transmission systems. Other suitable applications lay in systems where power consumption is a critical factor and the used transmission bandwidth can be varied. Systems based on DMT or Wavelet transform with dynamic bandwidth allocation as a result of different bitcapacity demands and channel characteristics is especially suitable for these methods.

## Claims

1. Method in a multi-tone transmission system wherein a usable frequency range of a channel is separated into a plurality of frequency bands, an analogue signal in each subband being filtered out by a plurality of band pass filters (10) at a receiving side,
and wherein the a signal in each subband is converted separately into a digital signal in a plurality of analogue-digital converters (11), each analogue-digital converter being associated to one subband, **characterised by** activating and deactivating each analogue-digital converter 11 in dependence of the presence of a signal in the associated subband.

2. Method as claimed in claim 1,
further including the step of processing separately each digital signal in each subband in a signal processing unit (14).

3. Method as claimed in claim 2,
further including the step of detecting presence of a signal in the associated subband in said signal processing unit (14).

4. A device in a multi-tone transmission system, wherein a plurality of bandpass filters (10) is operatively connected to an analogue line (12) at a receiving side, so as to separate a usable frequency range of a channel into a plurality of frequency bands,
and wherein each bandpass filter is operatively connected to an Analogue-Digital converter (11) for converting an analogue signal into a digital signal, each Analogue-Digital converter being associated to one subband, **characterised in that**, a control unit (13) is operatively connected to each of said Analogue-Digital converters (11) for activating and deactivating each converter in dependence of the presence of a signal in the associated subband.

5. A device as claimed in claim 4,
wherein a signal processing entity (15) is provided for each digital signal.

6. A device as claimed in claim 4,
wherein a single signal processing unit (14) is provided for said digital signals.

7. A device as claimed in claim 6,
wherein said signal processing unit (14) is operatively connected to manually operated means (17) for receiving control information for said Analogue-Digital converters (11).

## Patentansprüche

1. Verfahren in einem Mehrton-Übertragungssystem, wobei ein nutzbarer Frequenzbereich eines Kanals in eine Vielzahl von Frequenzbändern getrennt wird, wobei ein analoges Signal in jedem Unterband durch eine Vielzahl von Bandpassfiltern (10) auf einer Empfangsseite herausgefiltert wird,
und wobei das analoge Signal in jedem Unterband in einer Vielzahl von Analog/Digital-Wandlern (11) getrennt in ein digitales Signal umgewandelt wird, wobei jeder Analog/Digital-Wandler einem Unterband zugeordnet ist, **gekennzeichnet durch** Aktivieren und Deaktivieren jedes Analog/Digital-Wandlers (11) in Abhängigkeit von dem Vorhandensein eines Signals im zugehörigen Unterband.

2. Verfahren nach Anspruch 1,
das weiterhin den Schritt zum getrennten Verarbeiten jedes digitalen Signals in jedem Unterband in einer Signalverarbeitungseinheit (14) enthält.

3. Verfahren nach Anspruch 2,
das weiterhin den Schritt zum Erfassen eines Vorhandenseins eines Signals in dem zugehörigen Unterband in der Signalverarbeitungseinheit (14) enthält.

4. Vorrichtung in einem Mehrton-Übertragungssystem, wobei eine Vielzahl von Bandpassfiltern (10) betriebsmäßig mit einer analogen Leitung (12) auf einer Empfangsseite verbunden ist, um einen nutzbaren Frequenzbereich eines Kanals in eine Vielzahl von Frequenzbändern zu trennen, und wobei jedes Bandpassfilter betriebsmäßig mit einem Analog/Digital-Wandler (11) zum Umwandeln eines analogen Signals in ein digitales Signal verbunden ist, wobei jeder Analog/Digital-Wandler einem Unterband zugeordnet ist,
**dadurch gekennzeichnet, dass** eine Steuereinheit (13) betriebsmäßig mit jedem der Analog/Digital-Wandler (11) zum Aktivieren und Deaktivieren jedes Wandlers in Abhängigkeit von dem Vorhandensein eines Signals im zugehörigen Unterband verbunden ist.

5. Vorrichtung nach Anspruch 4,
wobei eine Signalverarbeitungseinheit (15) für jedes digitale Signal vorgesehen ist.

6. Vorrichtung nach Anspruch 4,
wobei eine einzige Signalverarbeitungseinheit (14) für die digitalen Signale vorgesehen ist.

7. Vorrichtung nach Anspruch 6,
wobei die Signalverarbeitungseinheit (14) betriebsmäßig mit einer manuell betätigten Einrichtung (17) zum Empfangen von Steuerinformation für die Analog/Digital-Wandler (11) verbunden ist.

## Revendications

1. Procédé dans un système de transmission multitonalité dans lequel une plage de fréquences utilisable d'une voie est séparée en une pluralité de bandes de fréquences, un signal analogique dans chaque sous-bande étant éliminé par filtrage à l'aide d'une pluralité de filtres passe-bande (10) d'un côté réception ;
et dans lequel le signal analogique dans chaque sous-bande est converti séparément en un signal numérique dans une pluralité de convertisseurs (11) d'analogique en numérique, chaque convertisseur d'analogique en numérique étant associé à une sous-bande, **caractérisé par** l'activation et la désactivation de chaque convertisseur (11) d'analogique en numérique en fonction de la présence d'un signal dans la sous-bande associée.

2. Procédé selon la revendication 1, comprenant en outre l'étape de traitement séparément, dans une unité (14) de traitement de signal, de chaque signal numérique de chaque sous-bande.

3. Procédé selon la revendication 2, comprenant en outre l'étape de détection, dans ladite unité (14) de traitement de signal, de la présence d'un signal dans la sous-bande associée.

4. Dispositif dans un système de transmission multitonalité, dans lequel une pluralité de filtres passe-bande (10) est connectée de façon fonctionnelle à une ligne analogique (12) d'un côté réception, de façon à séparer une plage de fréquences utilisable d'une voie en une pluralité de bandes de fréquences;
et dans lequel chaque filtre passe-bande est connecté fonctionnellement à un convertisseur (11) d'analogique en numérique destiné à convertir un signal analogique en un signal numérique, chaque convertisseur d'analogique en numérique étant associé à une sous-bande, **caractérisé en ce qu'**une unité (13) de commande est connectée fonctionnellement à chacun desdits convertisseurs (11) d'analogique en numérique pour activer et désactiver chaque convertisseur en fonction de la présence d'un signal dans la sous-bande associée.

5. Dispositif selon la revendication 4, dans lequel une entité (15) de traitement de signal est prévue pour chaque signal numérique.

6. Dispositif selon la revendication 4, dans lequel une unité (14) de traitement de signal est prévue pour lesdits signaux numériques.

7. Dispositif selon la revendication 6, dans lequel ladite unité (14) de traitement de signal est connectée fonctionnellement à un moyen (17) mis en oeuvre manuellement pour recevoir de l'information de commande pour lesdits convertisseurs (11) d'analogique en numérique.
